# EUROPEAN PATENT APPLICATION

(11) **EP 0 639 324 A1**
(43) Date of publication of application: **22.02.1995**
(21) Application number: 94111458.9
(22) Date of filing: 22.07.1994
(51) Int. Cl.: A01D 46/28

(54) **Narrow Harvester**

(30) Priority: 20.08.1993 US 109508
(71) Applicant: FMC CORPORATION, Chicago Illinois 60601 (US)
(72) Inventor: Scott, Phillip R., Madera, California 93637 (US)
(74) Representative: Altenburg, Udo, Dipl.-Phys.

(57) **Abstract**

A narrow harvester (30), which has a pair of longitudinal conveyors (66) with a horizontal portion (68) inline with the front wheels (42) and the rear wheels (54) and an inclined portion (70) that rise above the rear wheels (54). The conveyors (66) are placed to allow the wheels (42,54) to be adjacent to the chassis allowing a narrow harvester (30), and so that the harvester (30) is open in the front, allowing a wider passage for plants to pass through.

## Description

The present invention relates to mobile harvesters such as grape and raisin harvesters. In the past, the length of such harvesters have been minimized making the harvester easier to handle, and a result harvesters tend to be wider. Narrower rows in crops such as grapes are desirable, but the prior are harvesters are too wide to harvest in narrower rows.

The inventive narrow harvester has a pair of longitudinal conveyors with a horizontal portions extending from the front wheels to the rear wheels and an inclined portion that rise above the rear wheels. The conveyors are L-shaped and placed to allow the wheels to be adjacent to the chassis allowing a narrow harvester, and so that the harvester is open in the front, allowing a wider passage for plants to pass through the front of the vehicle.

The present invention provides a narrow harvester, which is able to harvest in narrower rows.

Figure 1 is a side elevation of a narrow harvester of the present invention.

Figure 2 is a rear elevation of the first embodiment of the narrow harvester having a discharge conveyor positioned to receive the harvested grapes or raisins and discharge them into a truck or container.

Figure 3 is a top view of the narrow harvester.

Figure 4 is a sectional view of one of the longitudinal conveying systems with parts cut away.

Figure 5 is a section taken along lines 5-5 of Figure 4 illustrating several components of one of the conveying systems.

Figure 6 is a horizontal section taken along lines 6-6 of Figure 5.

### DESCRIPTION OF THE PREFERRED EMBODIMENT

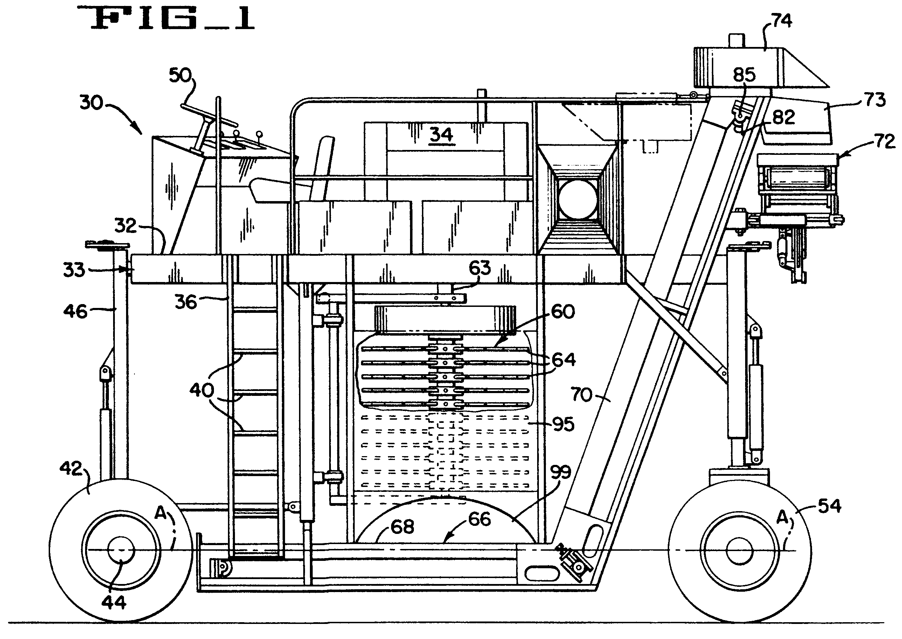

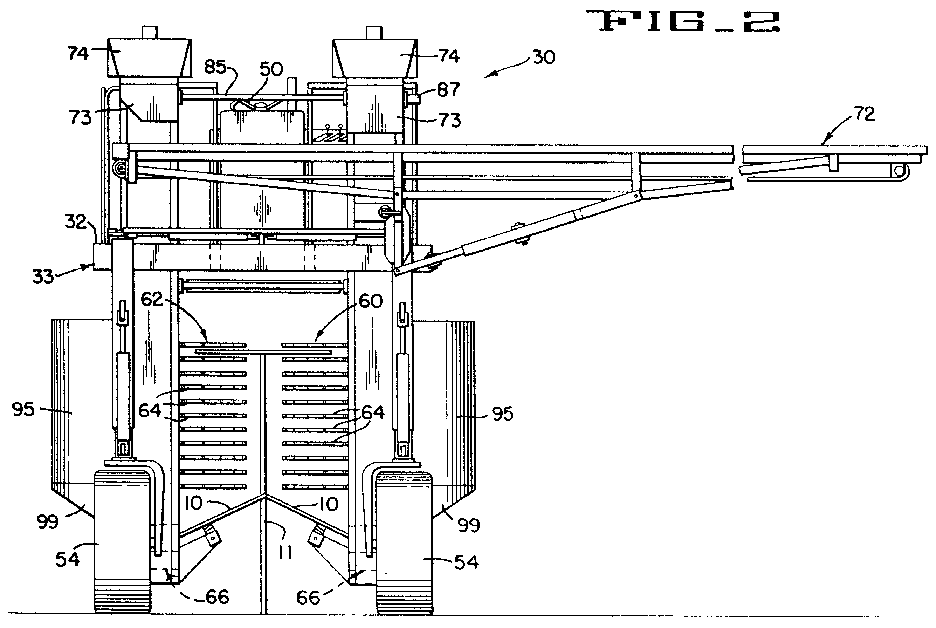

Having reference to the narrow harvester 30 (Figs. 1 and 2) of the present invention illustrating an upper platform 32 on a main frame 33 which supports a conventional engine 34 with the usual controls for operating the engine. The engine and controls are supported on the upper platform 32 and are accessible by a ladder 36 connected to the upper platform 32 and having steps 40 (Fig. 1).

The upper platform 32 is partially supported by the main frame 33 and a pair of small steerable front wheels 42, only one being shown in Figure 1. Each front wheel 42 is journaled on an axle 44 which is welded to an upright steering rods 46 (Fig. 1) that are pivotally connected to the upper platform 32. The steering rods 46 are connected to the steering wheel 50 of the harvester 30 through a conventional linkage.

As illustrated in Figures 1 and 2, a pair of drive wheels 54 are connected to the engine 34 by conventional drive systems.

As best shown in Figures 1 and 2, a pair of shaker heads 60 and 62 are mounted on the main frame 33 of the harvester 30 which has a plurality of radially extending tines 64 that engage grapes or raisins and shake them free from the vines (not shown). Each shaking head 60 and 62 is driven by hydraulic motor 63, only one being shown in Figure 1.

As shown in Figures 1 and 2, the narrow harvester 30 includes two longitudinal conveyor systems 66 with one system on each side of the harvester, which systems include an endless horizontal portion 68 and an upwardly inclined portion 70 which convey grapes and/or raisins to a discharge conveyor 72. after passing through discharge chutes 73. Power driven blowers 74 are mounted on upwardly inclined elevator housings for blowing leaves or the like free from the grapes.

The horizontal portion 68 is inline with the front wheels 42 and the drive (or rear wheels) 54. In the specification and claims, that the horizontal portion 68 is inline with the front wheels 42 and the drive (or rear wheels) 54 is defined as meaning the horizontal portion 68 extends between the front wheels 42 and the drive wheels (or rear wheels) 54, so that the horizontal portion 68 conveys the crop along a line A-A extending from the front wheels 42 and the rear wheels 54. The upwardly inclined portion 70 extends from between the front wheels 42 and the rear wheels 54 to a position above the rear wheels 54. By extending the horizontal portion between the front wheels 42 and the drive wheels 54, the drive wheels 54 may be placed closer together than provided for in the prior art, thus providing a narrow harvester.

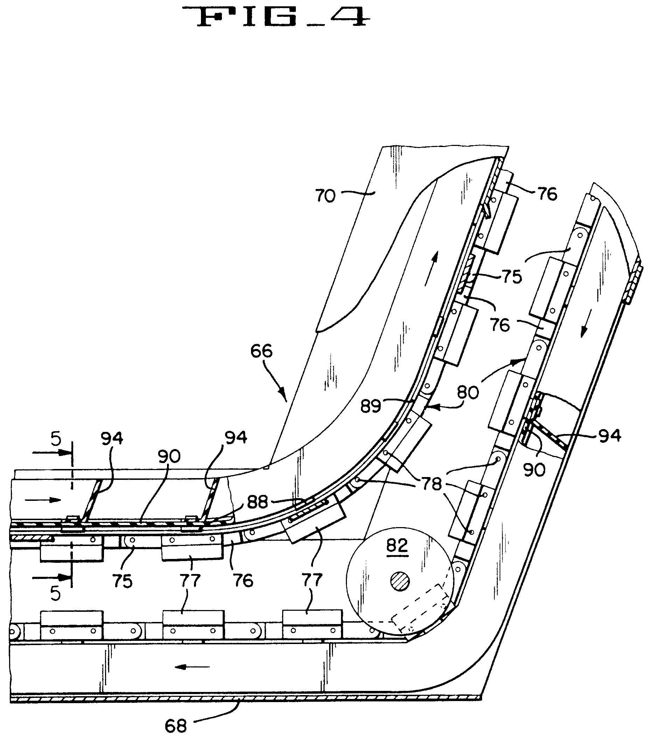

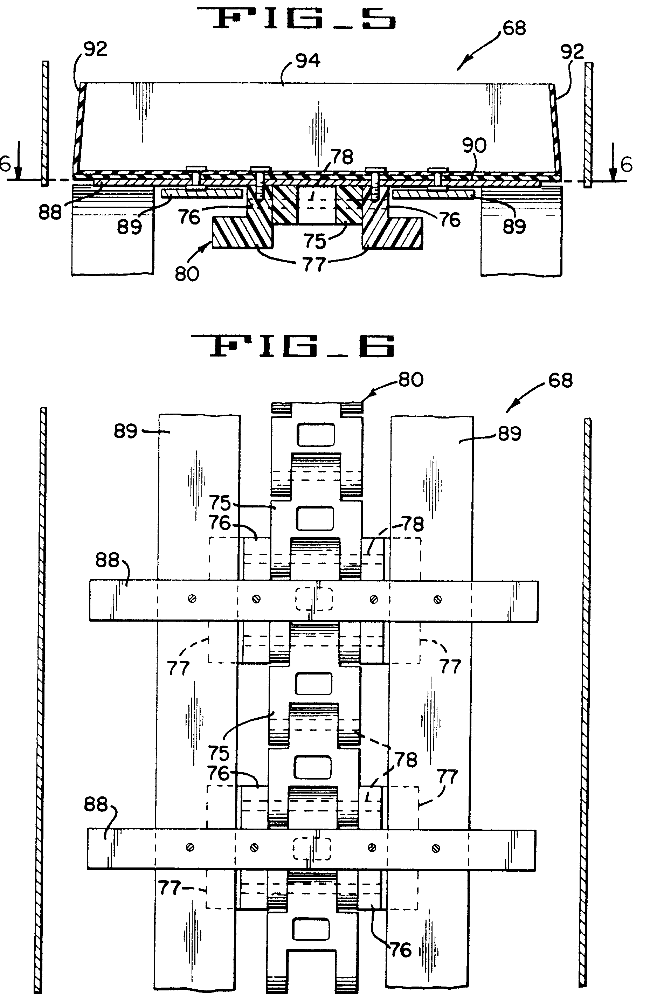

Each conveying system 66 includes a plurality of plastic links 75 and 76 (Figs. 4, 5 and 6) that are pivotally connected together by elongated bolts 78 defining an endless plastic chain 80. End portions and intermediate portions of the plastic chain 80 are each trained around plastic wheels 82. An upper chain supporting shaft 85 is driven by a hydraulic motor 87. The plurality of plastic links 76 have L-shaped hook portions 77.

As illustrated in Figures 4, 5 and 6, equally spaced flat steel bars 88 are bolted to the plastic links 76 and are slidably received on the upper surface of a pair of steel guide tracks 89. An endless stretchable conveyor belt 90 is bolted to the steel bars 88 and includes flexible inwardly angled side walls 92, and upwardly and forwardly angled upstanding cross-bars 94 for retaining grapes and raisins on the belt 90 while conveying them upwardly into the discharge conveyor 72 (Fig. 1). When the conveyor passes from the horizontal portion 68 to the upwardly inclined portion 70 the L-shaped hook portions 77, grab the steel guide tracks 89 causing the conveyor 66 to make the bend. The endless plastic chain 80 extends over the inclined portion 70, and folds under the inclined portion 70 and then travels under the horizontal portion 68, to make an L-shape.

As illustrated in Figure 2, the harvested grapes or raisins fall onto spring loaded plates 10 (Fig. 2) which are resiliently opened in response to contacting the trunks of the grape vines and/or the trellis posts 11 (Fig. 2) and are closed after passing the post due to the forward motion of the grape harvester.

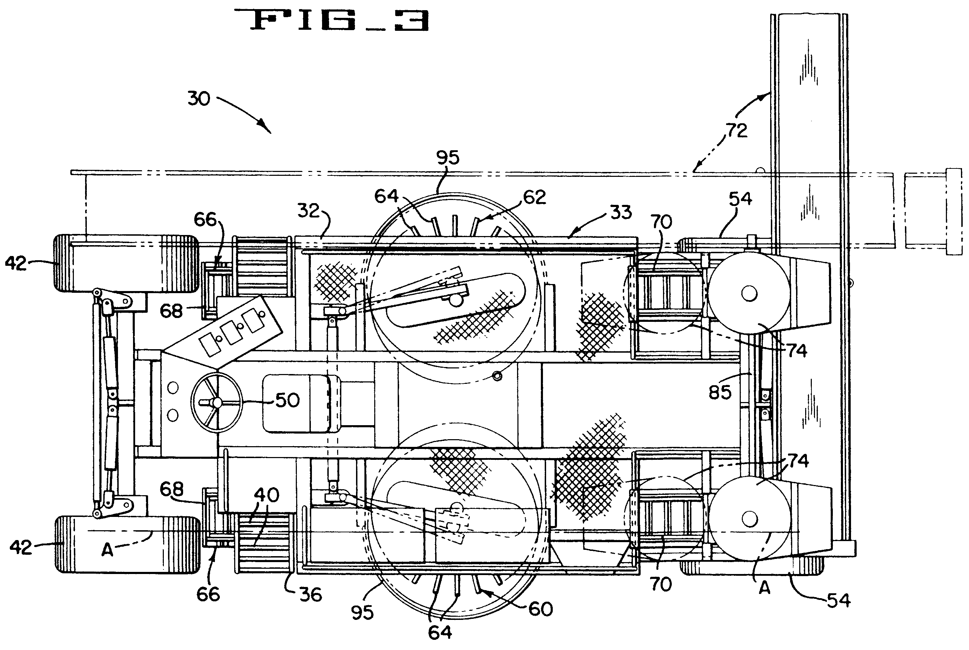

Having further reference to the harvester 30 (Figs. 1, 2 and 3), the elongated discharge conveyor 72 is pivotally supported by a vertical pivot pin which permits the discharge conveyor 72 to be swung 90 degrees from a transport position along one side of the harvester 30 and parallel to the longitudinal axis of the harvester when driven between fields and roads or the like.

The shaker heads 60 and 62 are enclosed within removable arcuate plastic curtains 95 which cause the grapes or raisins to fall onto inclined surfaces 99 (Figs. 1) which guide the grapes or raisins onto the horizontal portions 68 of the conveying system 66. The spring loaded plates 10 (Fig. 2) also aid in guiding the grapes or raisins into the horizontal portion of the conveyor system 66.

In other embodiments of the invention, the rear wheels may be used for steering. In other embodiment the harvester could have a two wheel drive or a four wheel drive.

Although the best mode contemplated for carrying out the present invention has been herein shown and described, it will be understood that modification and variation may be made without departing from what is regarded to be the subject matter of the invention.

## Claims

1. A narrow harvester for harvesting crops from plants, comprising:
a chassis;
means for removing crops from the plants supported by the chassis;
a left front wheel supporting the chassis;
a right front wheel supporting the chassis;
a left rear wheel supporting the chassis;
a right rear wheel supporting the chassis;
a first conveyor, comprising a horizontal portion, wherein the horizontal portion is inline with the left front wheel and the left rear wheel; and
a second conveyor, comprising a horizontal portion, wherein the horizontal portion is in line with the right front wheel and the right rear wheel.

2. The apparatus according to claim 1, wherein the first conveyor further comprises an upwardly extending portion, which extends from in front of the left rear wheel to above the left rear wheel, and wherein second conveyor further comprises an upwardly extending portion, which extends from in front of the right rear wheel to above the right rear wheel.

3. The apparatus according to claim 2, further comprising a first means for directing crops into the first conveyor and a second means for directing crops into the second conveyor.

4. The apparatus according to claim 3, wherein said first means for directing crops is partially formed from a first group of spring loaded plates which contact the plants, and wherein said second means for directing crops is partially formed from a second group of spring loaded plates which contact the plants.

5. The apparatus according to claim 4, wherein the first conveyor comprises:
a plurality of plastic links pivotally connected together wherein the plastic links have hooks;
a first plurality of bolts connecting aid plastic links together;
a plurality of transversely extending steel strips rigidly secured to spaced links;
an endless stretchable rubber belt supported on said spaced links and having inwardly sloping side walls;
a plurality of spaced upstanding cross-bars rigidly secured to said stretchable rubber belt supported on said spaced links and having inwardly sloping side walls;
a pair of guides along a transition from the horizontal portion to the inclined portion, wherein the hooks grip the pair of guides; and
a plurality of spaced upstanding cross-bars rigidly secured to said stretchable rubber belt for pushing the crop.

6. The apparatus according to claim 5, wherein the first conveyor goes over the upwardly extending portion, and then folds under the upwardly extending portion and under the transition from the horizontal portion to the inclined portion, and then under the horizontal portion.

7. The apparatus according to claim 4, wherein the first conveyor extends under the horizontal portion of the first conveyor, and wherein the second conveyor extends under the horizontal portion of the second conveyor.

8. The apparatus according to claim 3, wherein the first conveyor extends under the horizontal portion of the first conveyor, and wherein the second conveyor extends under the horizontal portion of the second conveyor.

9. The apparatus according to claim 2, wherein the first conveyor extends under the horizontal portion of the first conveyor, and wherein the second conveyor extends under the horizontal portion of the second conveyor.

10. The apparatus according to claim 1, wherein the first conveyor extends under the horizontal portion of the first conveyor, and wherein the second conveyor extends under the horizontal portion of the second conveyor.
